# EUROPEAN PATENT SPECIFICATION

(11) **EP 1 971 784 B1**
(45) Date of publication and mention of the grant of the patent: **07.09.2011**
(21) Application number: 06820545.9
(22) Date of filing: 14.12.2006
(51) Int. Cl.: F16B 5/02, F16B 35/04, F16B 43/00

(54) **A FASTENER ASSEMBLY**
BEFESTIGUNGSANORDNUNG
ENSEMBLE DE FIXATION

(30) Priority: 16.12.2005 GB 0525691
(43) Date of publication of application: 24.09.2008
(73) Proprietor: Airbus Operations Limited, Bristol BS99 7AR (GB)
(72) Inventor: ROWE, James, Henry, Cheshire CH65 6RP (GB); MOORE, John, South Glousester BS35 3LW (GB)
(74) Representative: Ford, James
(86) International application number: PCT/GB2006/004709
(87) International publication number: WO 2007/068947

(56) References cited:
- GB-A- 2 123 510
- US-A- 2 940 495
- US-A- 4 396 309
- US-A- 5 704 749

## Description

### Technical Field

This invention relates to a fastener assembly and to a method of fastening together components. More particularly the invention relates to a slave bolt assembly for use in the manufacture of aircraft components and a method of assembling aircraft components.

### Background of the Invention

In the manufacture of aircraft structures, components are typically partially assembled in a jig. For example in the manufacture of wings for large aircraft, the wing components, including the wing skin panels, the spars, the ribs and other major may be assembled in a jig. Holes for fasteners are then drilled in predetermined locations. Slave bolts are then inserted in some of the holes and dowels inserted in others to hold the wing assembly together whilst further holes are drilled. Thereafter the bolts are unfastened and the components disassembled, for example, to allow deburring to be carried out, before they are finally reassembled.

The slave bolts serve to clamp the components together but it is important that the threaded bolts are of substantially smaller diameter than the holes in the components that they pass through in order that the sides of the holes are not damaged. The dowels have plain circumferential surfaces, have slightly tapered ends and engage the walls of the holes, thereby serving to align the components. It is disadvantageous to require two separate components; for example, it makes handling of the parts more complex, which is a problem, particularly, but not only, when an automated delivery system is preferred.

It is an object of the invention to provide a fastener assembly that avoids or mitigates the disadvantage referred to above.

US 5,704,749 describes a fastener assembly having a receptacle attached to the underside of a substructure, and extending through a hole in the substructure. The fastener includes a tapered section which contacts a hole in the panel through which the fastener extends. When the fastener engages a threaded section of the receptacle, the tapered section exerts a lateral force on the panel to align the hole in the panel with the bore of the receptacle.

GB 2 123 510 on which the preamble of the independent claims is based, describes a bolt having a threaded section of smaller diameter than a main body section, the two sections being joined by a tapering section. Holes in two members to be joined are aligned by the tapering section of the bolt.

### Summary of the Invention

The present invention provides a slave bolt assembly for use in the manufacture of aircraft components including:
a bolt having first and second ends and comprising
a bolt head at the first end,
a first shank portion, adjacent to the bolt head, having a smooth circumferential surface of a first diameter arranged to engage the walls of holes in the components and thereby align the components, and
a second shank portion, positioned between the first shank portion and the second end and coaxial with the first shank portion, of a second diameter smaller than the first diameter, at least a part of the second shank portion being externally screw threaded; and
a nut having first and second ends and comprising a first bore extending from the first end of the nut and of a diameter greater than the first diameter for fitting over part of the first shank portion of the bolt, and,
a screw threaded bore, in the region of the second end, for screw threaded engagement with the screw threaded second shank portion, the screw threaded bore being coaxial with and leading into the first bore,
wherein engagement of the second shank portion and the screw threaded bore is arranged to allow components to be clamped together by the first end of the nut and the bolt head, characterised in that the first bore in the nut is of greater axial length than the screw threaded bore.

By providing a slave bolt with a first shank portion having a smooth circumferential surface and a second shank portion that is threaded and of smaller diameter it becomes possible to provide in a single fastener assembly both the function of clamping (performed in the prior art described above by the conventional slave bolt) and the function of aligning (performed in the prior art described above by the dowel). That makes the whole fastening procedure simpler and reduces the number of different kinds of part that have to be handled.

By providing a nut which fits over the smooth circumferential part of the bolt, a slave bolt assembly according to embodiments of the invention is able to clamp the components together without the threaded portion of the bolt being in contact with the hole. When the nut and bolt are threaded onto one another the first bore of the nut axially spaces the first end of the nut (which, along with the bolt head, performs the clamping action) from the threaded portion of the bolt. As such, during assembly the first end of the nut may be axially aligned with a portion of the smooth circumferential surface of the bolt thereby ensuring that the second, threaded, shank portion is beyond the hole.

Preferably the bolt head is at one end of the first shank portion. Preferably the second shank portion extends from the end of the first shank portion to the second end of the bolt. Thus the bolt preferably consists of three parts: the bolt head, the first shank portion and the second shank portion. The bolt head and the second shank portion are used in providing the clamping function of the assembly whilst the first shank portion is used in providing the aligning function.

The bolt head may be of non-circular exterior cross-section, for example, it may have a hexagonal exterior cross-section. The first and/or second end of the bolt may be formed with a blind bore of non-circular, for example, hexagonal, cross-section, the bore being coaxial with the first and second shank portions of the bolt. Such formations facilitate the relative rotation of the nut and the bolt that is required during fastening or unfastening.

The second end of the nut may be closed over but it is preferred that the screw threaded bore in the nut extends through the second end of the nut. It is then possible to screw the nut fully onto the second shank portion of the bolt allowing a greater range in the thickness of articles on which the fastener assembly can be employed.

The first bore in the nut is preferably a plain bore and may be of greater axial length than the screw threaded bore. The length of the screw threaded bore need only be sufficient to enable the thread to transmit sufficient clamping force, whereas the length of the first bore can determine the range of thickness of articles on which the fastener assembly can be employed and is therefore preferably longer.

The assembly may further include a washer at the first end of the nut around the first bore. The washer may be formed as an integral part of the nut but is preferably formed separately from the nut and fastened to the nut. The washer may be made of a plastics material, which may be a polyamide, for example nylon.

Preferably the washer is formed with a front face part extending over the end face of the first end of the nut, an outer circumferential part extending rearwardly of the front face part and a retaining part that extends inwardly from the outer circumferential part and engages the nut to retain the washer on the nut. The washer may be resiliently deformed as it is fitted over the end face of the first end of the nut. The first end of the nut may be formed with a flange and the washer may be fitted over the flange.

The bolt head may be of generally frusto-conical shape to define a countersunk bolt head. Such a bolt head is of course especially well suited to engagement in a countersunk hole. In some cases the hole may not be countersunk. Accordingly the fastener assembly may further include a washer arranged to change the rear face of the bolt head from a frusto-conical face to a flat face perpendicular to the axis of the bolt. With such a washer, the bolt head is suitable for use with non-countersunk holes. The washer may be made of a plastics material, which may be a polyamide, for example nylon. The washer may be fitted to the bolt, for example as a snap fit, and may include an internally projecting portion that fits in a groove at a junction of the first shank portion and the bolt head.

The diameter of the first shank portion is preferably made to a tolerance of less than 0.05 mm and preferably to a tolerance of less than 0.02 mm. Thus, when in accordance with this preferred aspect of the invention, a multiplicity of similar fastener assemblies are provided, the actual diameters of the first shank portions vary by less than 0.10 mm and preferably by less than 0.04 mm.

The bolt and the nut may be made of metal, for example, steel.

The present invention further provides a method of assembling components, the method comprising the following steps:
holding the components in desired relationship, with holes in the articles aligned,
providing a bolt having first and second ends and comprising a bolt head at the first end, a first shank portion having a smooth circumferential surface of a first diameter and a second shank portion coaxial with the first shank portion and of a second diameter smaller than the first diameter, at least a part of the second shank portion being externally screw threaded, the first shank portion being positioned between the bolt head and the second shank portion,
inserting the second end of the bolt into and through the aligned holes, the first shank portion of the bolt engaging the walls of the holes to align the components,
providing a nut having first and second ends and including a first bore extending from the first end of the nut and of a diameter greater than the first diameter of the first shank portion, and, in the region of the second end, a screw threaded bore coaxial with and leading into the first bore, and
screwing the nut onto the bolt with the first bore of the nut fitting over part of the first shank portion of the bolt and the screw threaded bore of the nut in screw threaded engagement with the screw threaded shank portion such that the components are clamped together by the first end of the nut and the bolt head, characterised in that the components are aircraft components and the first bore in the nut is of greater axial length than the screw threaded bore.

The method may further include the step of forming the holes in the components in predetermined locations. For example the holes may be formed by by drilling.

The method is of particular relevance in the temporary assembly of articles, for example, while drilling is carried out. Thus the method may further include the subsequent steps of:
unscrewing the nut from the bolt,
removing the bolt from the aligned holes, and separating the articles.

Prior to unscrewing the nuts and removing the bolts the method may further include drilling further holes in the components. The further holes may fcr example be provided to receive fasteners during final assembly of the components, for example when forming a completed aircraft component such as a wing.

The method may further comprise refastening the components with the further holes in alignment. The components may for example be refastened using any suitable fastener for final, or permanent, assembly of aircraft components.

After dissembling the components, for example prior to final assembly, the holes in the components may be deburred.

The invention is of particular relevance to the aircraft industry and the articles to be fastened together are aircraft components, for example, one article may be a wing panel and another article may be a rib.

The invention is of particular advantage where the articles are of composite material, or at least one of the articles is of composite material. Such material is especially vulnerable to damage.

### Description of the Drawings

By way of example, an embodiment of the invention will now be described with reference to the accompanying drawings, of which:
Fig. 1 is a sectional side view of a bolt and washer of a fastener assembly;
Fig. 2 is a sectional side view of a nut and washer of the fastener assembly; and
Fig. 3 is a sectional side view of the fastener assembly securing together two components.

### Detailed Description

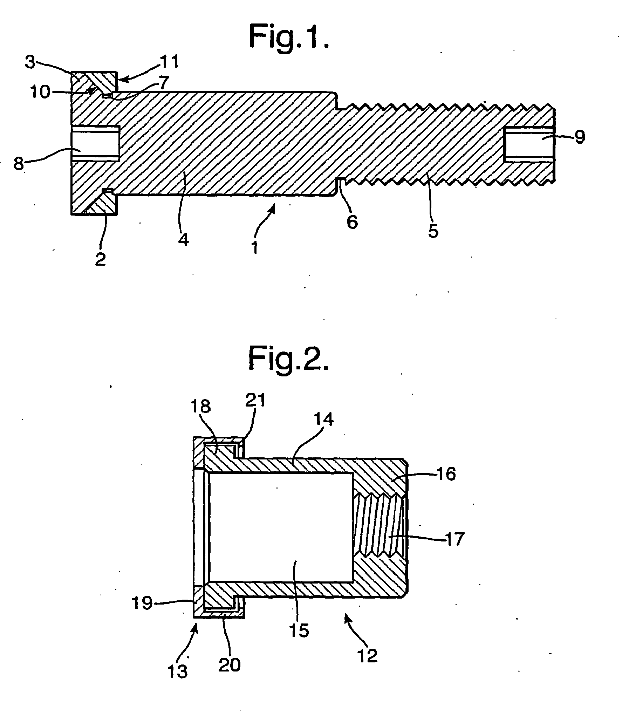

Referring first to Fig. 1, there is shown a bolt 1 and a washer 2. The bolt 1 consists of a countersunk bolt head 3, a first shank portion 4 and a second shank portion 5. The shank portions 4 and 5 are of circular cross-section and coaxial. The first shank portion 4 has a smooth circumferential surface and is of larger diameter than the second shank portion 5, which is screw threaded. An undercut 6 is provided at the junction of the shank portions 4 and 5 and an undercut 7 is provided at the junction of the head 3 and the first shank portion 4.

A blind bore 8 is provided in the bolt head and a blind bore 9 is provided in the second shank portion 5. Each of the blind bores 8,9 is of hexagonal cross-section and coaxial with the shank portions 4,5. The bores 8,9 provide recesses which can be engaged by a suitable tool to rotate the bolt.

The washer 2, which is made of nylon, is of generally annular shape and has an internally projecting rib which engages in the undercut 7 to retain the washer next to the bolt head 3. As can be seen in Fig. 1, the bolt head 3 is of generally frusto-conical shape having a sloping rear face and the washer 2 is formed with a corresponding sloping face 10 which rests against the sloping rear face of the bolt head. The washer is also formed with a flat face 11, opposite the sloping face 10. Thus with the washer 2 fitted, the bolt 1 behaves like a flat headed bolt, whereas without the washer 2 it has a countersunk head. In order to fit the washer 2 it is pressed over the shank of the bolt until the internally projecting rib on the washer enters the undercut 7. Thus the washer 2 is a snap fit on the bolt.

Referring now to Fig. 2, there is shown a nut 12 and a washer 13. The nut 12 consists of a forward portion 14 formed with a plain bore 15 of circular cross-section and a rearward portion 16 formed with a screw threaded bore 17 of circular cross-section. The bores 15 and 17 are coaxial and the bore 15 is substantially larger than the bore 17. At the front end of the nut, the forward portion 14 has an integral flange 18.

The washer 13 consists of a front face part 19 of annular shape, an outer circumferential part 20 extending rearwardly from the periphery of the front face part 19 and a retaining part 21 in the form of a lip that extends inwardly from the rear end of the circumferential part 20. The washer is made of nylon and can be resiliently deformed so as to be fitted over the flange 18 of the nut, as shown in Fig. 2. Once so fitted, the front face part 19 extends over part of the front face of the nut to provide the washer function.

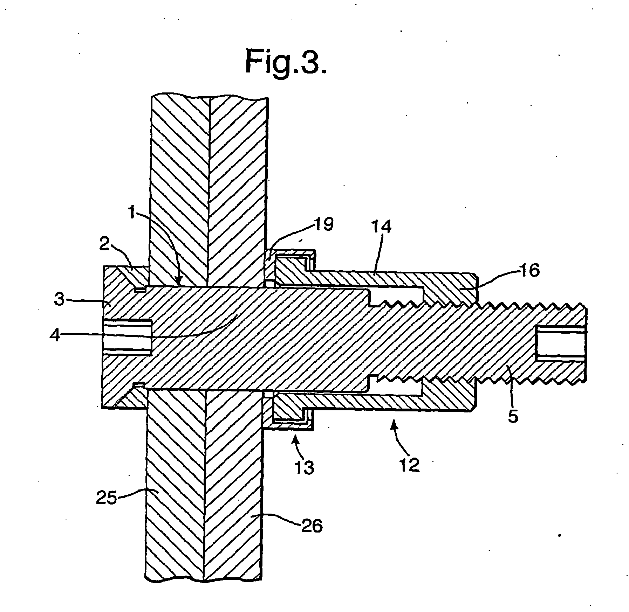

Fig. 3 shows the fastener assembly of Figs. 1 and 2 in use to secure together two components, referenced 25 and 26 in Fig. 3. The components may for example comprise a wing panel and a rib of an aircraft wing. With the components 25 and 26 held in a desired relationship and aligned holes drilled in the components, the bolt 1 is inserted into the holes to the position shown in Fig. 3. It will be seen that in the example described the hole drilled is not countersunk and therefore the washer 2 is used. The first shank portion 4 is an exact fit in the hole and, as shown in Fig. 3, is of sufficient length to extend through the combined thickness of the components 25,26 and project on the other side, with the second shank portion 5 projecting further on that other side. The nut 12 is then screwed onto the bolt 1 with the forward portion 14 first being placed over the projecting end of the bolt 1 and the rearward portion 16 then being screwed onto the second shank portion 5 of the bolt. The plain bore 15 of the forward portion 14 of the nut is of a diameter slightly greater (for example 0.5 mm greater) than the diameter of the first shank portion 4 of the bolt and the forward portion 14 is therefore able to pass over the bolt 1 until the front face part 19 of the washer 13 abuts against the component 26.

Once the nut 12 is tightened, the fastener assembly is effective both to keep the components 25,26 clamped together and to keep them in alignment by virtue of the exact fit of the first shank portion 4 in the components. At the same time, because the first shank portion 4 is formed with a smooth circumferential surface, there is little risk of damage to the holes in the components 25,26.

With the components 25,26 clamped together by the fastener assembly, and in a typical case, also by other fastener assemblies, many other holes may be drilled in the components 25,26. The fastener assembly (and any other assemblies) can then be unfastened, the bolt removed and the components 25,26 deburred before being finally assembled again. The fastening and unfastening of the or each fastener assembly may be carried out manually or automatically.

By providing relatively long first and second shank portions 4,5 for the bolt 1 and by providing a relatively long bore 15 in the nut, the same bolt 1 can be used to clamp a range of thicknesses of components. Consequently a single fastener assembly is suitable for use in all holes of a given diameter. Of course different fastener assemblies are required for different diameters of hole. Conveniently, the bolt heads 3 are provided in only a limited number of different sizes, with the same size of bolt head being used with more than one diameter of hole. These features facilitate the handling of the bolts by automated delivery equipment.

Whilst the present invention has been described and illustrated with reference to particular embodiments, it will be appreciated by those of ordinary skill in the art that the invention lends itself to many different variations not specifically illustrated herein. Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. A slave bolt assembly for use in the manufacture of aircraft components including:
a bolt (1) having first and second ends and comprising a bolt head (3) at the first end,
a first shank portion (4), adjacent to the bolt head (3), having a smooth circumferential surface of a first diameter arranged to engage the walls of holes in the components and thereby align the components, and
a second shank portion (5), positioned between the first shank portion (4) and the second end and coaxial with the first shank portion, of a second diameter smaller than the first diameter, at least a part of the second shank portion being externally screw threaded; and
a nut (12) having first and second ends and comprising
a first bore (15) extending from the first end of the nut and of a diameter greater than the first diameter for fitting over part of the first shank portion of the bolt, and
a screw threaded bore (17), in the region of the second end, for screw threaded engagement with the screw threaded second shank portion, the screw threaded bore being coaxial with and leading into the first bore
wherein engagement of the second shank portion (5) and

2. A slave bolt assembly according to claim 1, in which the bolt head (3) is at one end of the first shank portion (4).

3. A slave bolt assembly according to claim 1 or 2, in which the second shank portion (5) extends from the end of the first shank portion (4) to the second end of the bolt. the screw threaded bore (17) is arranged to allow components to be clamped together by the first end of the nut and the bolt head, **characterised in that** the first bore in the nut is of greater axial length than the screw threaded bore.

4. A slave bolt assembly according to any preceding claim, in which the screw threaded bore (17) extends through the second end of the nut (12).

5. A slave bolt assembly according to any preceding claim, in which the assembly further includes a washer (13) at the first end of the nut (12) around the first bore (15).

6. A slave bolt assembly according to claim 5, in which the washer (13) is formed separately from the nut (12) and is fastened to the nut.

7. A slave bolt assembly according to claim 6, in which the washer (13) is formed with a front face part (19) extending over the end face of the first end of the nut, an outer circumferential part (20) extending rearwardly of the front face part and a retaining part (21) that extends inwardly from the outer circumferential part and engages the nut to retain the washer on the nut.

8. A slave bolt assembly according to claim 5 or 6, in which the first end of the nut is formed with a flange (18) and the washer is fitted over the flange.

9. A slave bolt assembly according to any preceding claim, in which the bolt head (3) is of generally frusto-conical shape to define a countersunk bolt head.

10. A slave bolt assembly according to claim 9, further including a washer (2) arranged to change the rear face of the bolt head from an inclined face to a face perpendicular to the axis of the bolt.

11. A slave bolt assembly according to claim 10, in which the washer (12) is a snap fit on the bolt and includes an internally projecting portion that fits in a groove at the junction of the first shank portion and the bolt head.

12. A method of assembling components, the method comprising the following steps:
holding the components in desired relationship with holes in the articles aligned,
providing a bolt (1) having first and second ends and comprising a bolt head at the first end, a first shank portion (4) having a smooth circumferential surface of a first diameter and a second shank portion (5) coaxial with the first shank portion and of a second diameter smaller than the first diameter, at least a part of the second shank portion (5) being externally screw threaded, the first shank portion (4) being positioned between the bolt head (3) and the second shank portion,
inserting the second end of the bolt into and through the aligned holes, the first shank portion (4) of the bolt engaging the walls of the holes to align the components,
providing a nut (12) having first and second ends and including a first bore (15) extending from the first end of the nut and of a diameter greater than the first diameter of the first shank portion, and, in the region of the second end, a screw threaded bore (17) coaxial with and leading into the first bore, and
screwing the nut (12) onto the bolt (1) with the first bore (15) of the nut fitting over part of the first shank portion (4) of the bolt and the screw threaded bore (17) of the nut in screw threaded engagement with the screw threaded shank portion (5) such that the components are clamped together by the first end of the nut and the bolt head, **characterised in that** the components are aircraft components and the first bore in the nut is of greater axial length than the screw threaded bore.

13. A method according to claim 12, including the further step of forming the holes in the components in predetermined locations.

14. A method according to claim 12, including the further subsequent steps of:
drilling further holes in the components,
unscrewing the nut (12) from the bolt (1),
removing the bolt (1) from the aligned holes, and
separating the articles.

15. The method of claim 14, including the further subsequent steps of:
deburring the further holes, and
refastening the components with the further holes in alignment.

16. A method according to any of claims 12 to 15, in which at least one of the components to be fastened together is of composite material.

## Patentansprüche

1. Befestigungsbolzenanordnung zur Verwendung bei der Herstellung von Flugzeugkomponenten, die Folgendes enthält:
- einen Bolzen (1), der ein erstes und ein zweites Ende aufweist und Folgendes umfasst:
• einen Bolzenkopf (3) an dem ersten Ende,
• einen ersten Schaftabschnitt (4) neben dem Bolzenkopf (3), der eine glatte Umfangsfläche mit einem ersten Durchmesser aufweist, die dafür ausgelegt ist, die Wände von Löchern in den Komponenten in Eingriff zu nehmen und die Komponenten **dadurch** auszurichten, und
• einen zweiten Schaftabschnitt (5), der zwischen dem ersten Schaftabschnitt (4) und dem zweiten Ende angeordnet ist und koaxial zu dem ersten Schaftabschnitt verläuft und einen zweiten Durchmesser aufweist, der kleiner als der erste Durchmesser ist, wobei mindestens ein Teil des zweiten Schaftabschnitts mit einem Außengewinde versehen ist; und
- eine Mutter (12), die ein erstes und ein zweites Ende aufweist und Folgendes umfasst:
• eine erste Bohrung (15), die sich von dem ersten Ende der Mutter erstreckt und einen Durchmesser aufweist, der größer als der erste Durchmesser ist, um über einen Teil des ersten Schaftabschnitts des Bolzens zu passen, und
• eine Schraubgewindebohrung (17) in der Region des zweiten Endes für einen Schraubeingriff mit dem mit einem Schraubgewinde versehenen zweiten Schaftabschnitt, wobei die Schraubgewindebohrung koaxial zu der ersten Bohrung verläuft und in diese hinein führt,
wobei die Eingriffnahme des zweiten Schaftabschnitts (5) und der Schraubgewindebohrung (17) dafür ausgelegt ist, dass Komponenten durch das erste Ende der Mutter und den Bolzenkopf zusammengeklemmt werden können, **dadurch gekennzeichnet, dass** die erste Bohrung in der Mutter eine größere axiale Länge aufweist als die Schraubgewindebohrung.

2. Befestigungsbolzenanordnung nach Anspruch 1, wobei sich der Bolzenkopf (3) an einem Ende des ersten Schaftabschnitts (4) befindet.

3. Befestigungsbolzenanordnung nach Anspruch 1 oder 2, wobei sich der zweite Schaftabschnitt (5) von dem Ende des ersten Schaftabschnitts (4) zu dem zweiten Ende des Bolzens erstreckt.

4. Befestigungsbolzenanordnung nach einem der vorangehenden Ansprüche, wobei sich die Schraubgewindebohrung (17) durch das zweite Ende der Mutter (12) hindurch erstreckt.

5. Befestigungsbolzenanordnung nach einem der vorangehenden Ansprüche, wobei die Anordnung des Weiteren eine Unterlegscheibe (13) am ersten Ende der Mutter (12) um die erste Bohrung (15) herum enthält.

6. Befestigungsbolzenanordnung nach Anspruch 5, wobei die Unterlegscheibe (13) von der Mutter (12) getrennt ausgebildet ist und an der Mutter befestigt wird.

7. Befestigungsbolzenanordnung nach Anspruch 6, wobei die Unterlegscheibe (13) mit einem Stirnseitenteil (19), der sich über die erste Endfläche des ersten Endes der Mutter erstreckt, einem Außenumfangsteil (20), der sich hinter dem Stirnseitenteil erstreckt, und einem Halteteil (21), der sich von dem Außenumfangsteil einwärts erstreckt und die Unterlegscheibe an der Mutter in Eingriff nimmt, ausgebildet ist.

8. Befestigungsbolzenanordnung nach Anspruch 5 oder 6, wobei das erste Ende der Mutter mit einem Flansch (18) ausgebildet ist und die Unterlegscheibe über den Flansch geschoben ist.

9. Befestigungsbolzenanordnung nach einem der vorangehenden Ansprüche, wobei der Bolzenkopf (3) allgemein kegelstumpfförmig ist, um einen Senkkopf zu definieren.

10. Befestigungsbolzenanordnung nach Anspruch 9, die des Weiteren eine Unterlegscheibe (2) enthält, die dafür ausgelegt ist, die Rückseite des Bolzenkopfes von einer geneigten Fläche zu einer Fläche zu ändern, die senkrecht zur Achse des Bolzens verläuft.

11. Befestigungsbolzenanordnung nach Anspruch 10, wobei die Unterlegscheibe (12) auf den Bolzen aufgeschnappt wird und einen innen hervorstehenden Abschnitt aufweist, der in eine Nut an der Verbindungsstelle des ersten Schaftabschnitts und des Bolzenkopfes passt.

12. Verfahren zum Zusammenbauen von Komponenten, wobei das Verfahren die folgenden Schritte umfasst:
- Halten der Komponenten in einer gewünschten Beziehung, während Löcher in den Gegenständen aufeinander ausgerichtet sind,
- Bereitstellen eines Bolzens (1), der ein erstes und ein zweites Ende aufweist und Folgendes umfasst: einen Bolzenkopf an dem ersten Ende, einen ersten Schaftabschnitt (4), der eine glatte Umfangsfläche mit einem ersten Durchmesser aufweist, und einen zweiten Schaftabschnitt (5), der koaxial zu dem ersten Schaftabschnitt verläuft und einen zweiten Durchmesser aufweist, der kleiner als der erste Durchmesser ist, wobei mindestens ein Teil des zweiten Schaftabschnitts (5) mit einem Außengewinde versehen ist, wobei der erste Schaftabschnitt (4) zwischen dem Bolzenkopf (3) und dem zweiten Schaftabschnitt angeordnet ist,
- Einführen des zweiten Endes des Bolzens in und durch die aufeinander ausgerichteten Löcher, wobei der erste Schaftabschnitt (4) des Bolzens die Wände der Löcher in Eingriff nimmt, um die Komponenten aufeinander auszurichten,
- Bereitstellen einer eine Mutter (12), die ein erstes und ein zweites Ende aufweist und eine erste Bohrung (15) enthält, die sich von dem ersten Ende der Mutter erstreckt und einen Durchmesser aufweist, der größer als der erste Durchmesser des ersten Schaftabschnitts ist, und in der Region des zweiten Endes eine Schraubgewindebohrung (17) enthält, die koaxial zu der ersten Bohrung verläuft und in diese hinein führt,
- Schrauben der Mutter (12) auf den Bolzen (1), wobei die erste Bohrung (15) der Mutter über einen Teil des ersten Schaftabschnitts (4) des Bolzens geführt wird, und der Schraubgewindebohrung (17) der Mutter in Schraubeingriff mit dem mit einem Schraubgewinde versehenen Schaftabschnitt (5), dergestalt, dass die Komponenten durch das erste Ende der Mutter und den Bolzenkopf zusammengeklemmt werden, **dadurch gekennzeichnet, dass** die Komponenten Flugzeugkomponenten sind und die erste Bohrung in der Mutter eine größere axiale Länge aufweist als die Schraubgewindebohrung.

13. Verfahren nach Anspruch 12, das den weiteren Schritt enthält, die Löcher in den Komponenten an vorgegebenen Stellen auszubilden.

14. Verfahren nach Anspruch 12, das folgende weitere aufeinanderfolgende Schritte enthält:
- Bohren weiterer Löcher in die Komponenten,
- Lösen der Mutter (12) von dem Bolzen (1),
- Entfernen des Bolzens (1) aus den aufeinander ausgerichteten Löchern, und
- Trennen der Gegenstände.

15. Verfahren nach Anspruch 14, das folgende weitere aufeinanderfolgende Schritte enthält:
- Entgraten der weiteren Löcher,
- erneutes Befestigen der Komponenten, während die weiteren Löcher aufeinander ausgerichtet sind.

16. Verfahren nach einem der Ansprüche 12 bis 15, wobei mindestens eine der miteinander zu befestigenden Komponenten aus einem Verbundmaterial besteht.

## Revendications

1. Un assemblage de boulon prisonnier pour utilisation dans la fabrication de composants d'aéronef, comprenant :
un boulon (1) présentant une première et une deuxième extrémité et comprenant :
une tête de boulon (3) à la première extrémité,
une première partie de queue (4), adjacente à la tête de boulon (3), ayant une surface circonférentielle lisse d'un premier diamètre agencée pour venir en contact avec les parois d'orifices dans les composants et ainsi aligner les composants, et
une deuxième partie de queue (5), disposée entre la première partie de queue (4) et la deuxième extrémité et coaxiale avec la première partie de queue, présentant un deuxième diamètre plus petit que le premier diamètre, au moins une zone de la deuxième partie de queue présentant un filetage externe, et
un écrou (12) présentant une première et une deuxième extrémité et comportant
un premier alésage (15) s'étendant depuis la première extrémité de l'écrou et présentant un diamètre supérieur au premier diamètre pour montage sur une zone de la première partie de queue du boulon, et
un alésage taraudé (17), dans la région de la deuxième extrémité, destiné à venir en prise par vissage avec le filetage de la deuxième partie de queue, l'alésage fileté étant coaxial avec le premier alésage et menant dans celui-ci,
dans lequel la mise en prise de la deuxième partie de queue (5) et l'alésage taraudé (17) est agencé pour permettre le serrage l'un contre l'autre des composants au moyen de la première extrémité de l'écrou et de la tête du boulon, **caractérisé en ce que** le premier alésage dans l'écrou est d'une longueur axiale supérieure à celle de l'alésage taraudé.

2. Un assemblage de boulon prisonnier selon la revendication 1, dans lequel la tête de boulon (3) est située à une extrémité de la première partie de queue (4).

3. Un assemblage de boulon prisonnier selon la revendication 1 ou 2, dans lequel la deuxième partie de queue (5) s'étend à partir de l'extrémité de la première partie de queue (4) jusque à la deuxième extrémité du boulon.

4. Un assemblage de boulon prisonnier selon l'une quelconque des revendications précédentes, dans lequel l'alésage taraudé (17) s'étend à travers la deuxième extrémité de l'écrou (12).

5. Un assemblage de boulon prisonnier selon l'une quelconque des revendications précédentes, dans lequel l'assemblage comprend en outre une rondelle (13) à la première extrémité de l'écrou (12) autour du premier alésage (15).

6. Un assemblage de boulon prisonnier selon la revendication 5, dans lequel la rondelle (13) est formée séparément de l'écrou (12) et est fixée sur l'écrou.

7. Un assemblage de boulon prisonnier selon la revendication 6, dans lequel la rondelle (13) est formée avec une partie de face avant (19) qui s'étend sur la face d'extrémité de la première extrémité de l'écrou, une partie périphérique externe (20) s'étendant vers l'arrière de la partie de face avant et une partie de retenue (21) qui s'étend vers l'intérieur à partir de la partie périphérique externe et venant en prise avec l'écrou pour maintenir la rondelle sur l'écrou.

8. Un assemblage de boulon prisonnier selon la revendication 5 ou 6, dans lequel la première extrémité de l'écrou présente une bride (18) et la rondelle est montée sur la bride.

9. Un assemblage de boulon prisonnier selon l'une quelconque des revendications précédentes, dans lequel la tête de boulon (3) est globalement de forme tronconique pour définir une tête de boulon à tête fraisée.

10. Un assemblage de boulon prisonnier selon la revendication 9, comprenant en outre une rondelle (2) agencé pour faire passer la face arrière de la tête de boulon d'une face inclinée à une face perpendiculaire à l'axe du boulon.

11. Un assemblage de boulon prisonnier selon la revendication 10, dans lequel la rondelle (12) est montée par encliquetage sur le boulon et comprend une partie interne en saillie qui s'adapte dans une rainure à la jonction de la première partie de queue et de la tête de boulon.

12. Procédé de montage de composants, le procédé comprenant les étapes consistant à :
retenir les composantes selon une relation souhaitée avec des orifices dans les éléments alignés,
fournir un boulon (1) présentant une première et une deuxième extrémités et comprenant une tête de boulon à la première extrémité, une première partie de queue (4) présentant une surface périphérique lisse d'un premier diamètre et une deuxième partie de queue (5) coaxiale avec la première partie de queue est d'un deuxième diamètre inférieur au premier diamètre, au moins une partie de la deuxième partie de queue (5) présentant un filetage externe, la première partie de queue (4) étant positionnée entre la tête de boulon (3) et la deuxième partie de queue,
insérer la deuxième extrémité du boulon dans les orifices alignés afin de les traverser, la première partie de queue (4) du boulon venant en prise avec les parois des orifices afin d'aligner les composants,
fournir un écrou (12) présentant une première et une deuxième extrémité comprenant un premier alésage (15) s'étendant à partir de la première extrémité du boulon et d'un diamètre supérieur au premier diamètre de la première partie de queue, et, dans la région de la deuxième extrémité, un alésage taraudé (17) coaxial avec le premier alésage et menant dans celui-ci, et
visser l'écrou (12) sur le boulon (1) avec adaptation du premier alésage (15) de l'écrou sur une zone de la première partie de queue (4) du boulon, et engagement de l'alésage taraudé (17) du boulon par vissage avec la partie de queue à filetage externe (5) de façon à serrer les composants les uns contre les autres au moyen de la première extrémité de l'écrou et la tête boulon, **caractérisé en ce que** les composants sont des composants d'aéronef et le premier alésage prévu dans l'écrou est d'une longueur axiale supérieure à celle de l'alésage taraudé.

13. Procédé selon la revendication 12, comprenant l'étape supplémentaire consistant à former les orifices dans les composants à des emplacements prédéterminés.

14. Procédé selon la revendication 12, comprenant les étapes subséquentes supplémentaires consistant à :
percer des orifices supplémentaires dans les composants,
dévisser l'écrou (12) du boulon (1),
enlever le boulon (1) des orifices alignés, et
séparer lesdits éléments.

15. Procédé selon la revendication 14, comprenant les étapes subséquentes supplémentaires consistant à :
ébavurer les orifices supplémentaires, et
fixer de nouveaux les composants avec les orifices supplémentaires alignés.

16. Procédé selon l'une quelconque des revendications 12 à 15, dans lequel au moins un parmi les composants à fixer ensemble est en matériau composite.
